# EUROPÄISCHE PATENTSCHRIFT

(11) **EP 0 846 567 B1**
(45) Veröffentlichungstag und Bekanntmachung des Hinweises auf die Patenterteilung: **14.11.2001**
(21) Anmeldenummer: 97121085.1
(22) Anmeldetag: 01.12.1997
(51) Int. Cl.: B41M 5/00

(54) **Verwendung von teilacetalisiertem Polyvinylalkohol als Oberflächenmaterial in beschreibbaren oder bedruckbaren Oberflächen**
Use of partially acetalized polyvinyl alcohol as a material for printable surfaces
Utilisation de l'alcool polyvinylique partiellement acétalisé comme matériau pour des surfaces imprimables

(30) Priorität: 09.12.1996 DE 19650831
(43) Veröffentlichungstag der Anmeldung: 10.06.1998
(73) Patentinhaber: Clariant GmbH, 65929 Frankfurt am Main (DE)
(72) Erfinder: Fuss, Robert, Dr., 65835 Liederbach (DE); Wehner, Bernhard, 65606 Villmar (DE)

(56) Entgegenhaltungen:
- EP-A- 0 411 650
- EP-A- 0 634 289
- EP-A- 0 754 561
- EP-A- 0 799 712
- US-A- 4 731 355

## Beschreibung

Die vorliegende Erfindung betrifft die Verwendung von mit aliphatischen Aldehyden teilacetalisisertem Polyvinylalkohol als Oberflächenmaterial in beschreibbaren oder bedruckbaren Folien, insbesondere Overhead-Folien und Folien für Laserdrucker und Kopiergeräte sowie für Papierbeschichtungen.

Oberhead-Folien finden in der täglichen Bürokommunikation breite Anwendung. Die handelsüblichen Overhead-Folien sind mit Spezialstiften entweder permanent oder abwaschbar zu beschreiben. Dazu werden die Folien zumindest einseitig modifiziert, beispielsweise durch Beschichtung mit Polyvinylalkohol.

Die Veröffentlichungsschrift JP-A 4-216561 beschreibt zu diesem Zweck den Einsatz eines kommerziell erhältlichen Polyvinylalkohols, der teilweise mit einem aromatischen Aldehyd acetalisiert ist und der aus einem Lösemittelgemisch aus Wasser und Isopropanol appliziert werden kann. Laut JP-A 4-216561 werden die geforderten anwendungstechnischen Eigenschaften wie Beschreibbarkeit und Transparenz erreicht. Ein Nachteil des beschriebenen Verfahrens liegt jedoch darin, daß ein Lösemittelgemisch aus Wasser und einem Alkohol für die Applikation des Polyvinylalkohols benötigt wird.

EP-A-0 799 712 und EP-A-0 754 561, welche zum Stand der Technik gemäß Art.54(3) gehören, offenbaren Aufzeichnungmaterialien, deren Tintenaufnahmeschichten teilacetalisierten Polyvinylalkohol und Aluminahydrat enthalten.

Die Aufgabe der vorliegenden Erfindung war es, ein Oberflächenmaterial, das aus einem rein wäßrigen System zu applizieren ist, für eine Folie zur Verfügung zu stellen, auf der man auch mit herkömmlichen "hydrophilen" Stiften wischfest ein gutes Schriftbild erzeugen kann.

Es wurde überraschenderweise gefunden, daß Polyvinylalkohole, die einen Acetalisiserungsgrad von weniger als 20 Mol-%, bezogen auf Vinylalkohol-Einheiten, mit einem aliphatischen (C₁-C₈)-Aldehyd aufweisen, für den Einsatz in Overhead-Folien geeignet sind.

Gegenstand der vorliegenden Erfindung ist also die Verwendung von einem Oberflächenmaterial, das im wesentlichen aus einem wasserlöslichen, mit einem aliphatischen (C₁-C₈)-Aldehyd teilacetalisierten Polyvinylalkohol mit einem Acetalisierungsgrad von weniger als 20 Mol-%, bezogen auf Vinylalkohol-Einheiten besteht und frei von Aluminahydrat ist, in beschreibbaren oder bedruckbaren Folien sowie Papieren. Die mit diesem Oberflächenmaterial Beschichteten Beschreibbaren oder Bedruckten Folien oder Papiere sind ebenso Gegenstand der vorliegenden Erfindung.

Der erfindungsgemäß einzusetzende teilacetalisierte Polyvinylalkohol weist vorzugsweise einen Acetalisierungsgrad von 1 bis 15 Mol-%, insbesondere 5 bis 12 Mol-%, bezogen auf Vinylalkohol-Einheiten, auf.

Als Aldehydkomponente ist in den teilverseiften Polyvinylacetalen vorzugsweise ein aliphatischer (C₁-C₆)-Aldehyd, insbesondere C₄-Aldehyd eingebaut. Geeignete Aldehyde sind beispielsweise Formaldehyd, Acetaldehyd, n-Propanal, i-Propanal, i-Butyraldehyd, t-Butanal, n-Pentanal, n-Hexanal, n-Heptanal, n-Octanal, 2-Ethylhexanal, insbesondere n-Butyraldehyd.

Der eingesetzte Polyvinylalkohol besitzt vorzugsweise einen Verseifungsgrad von 70 bis 100 Mol-%, insbesondere 75 bis 98 Mol-%. Die Viskosität von 4 Gew.-%igen Lösungen des eingesetzten Polyvinylalkohols in Wasser bei 20 °C (nach Höppler, DIN 53015), beträgt vorzugsweise 1 bis 100 mPa·s, insbesondere 2 bis 70 mPa·s.

Der teilacetalisierte Polyvinylalkohol kann erfindungsgemäß in Form von frei tragenden Folien oder als Beschichtung auf Trägerfolien, bzw. auf Papieren, verwendet werden. Die Dicke derartiger Schichten auf Trägerfolien beträgt vorzugsweise 0,1 bis 100 *µ*m, insbesondere 1 bis 10 *µ*m.

Die zwei geforderten Eigenschaften, gute Beschreibbarkeit und gute Wasserbeständigkeit, werden durch zwei gegenläufige Materialspezifikationen erzielt. Wird die Acetalisierung des Polyvinylalkohols zu hoch eingestellt, ergibt sich eine gute Wasserbeständigkeit (Wischfestigkeit) aber eine schlechte Tintentrocknung. Ist der Acetalisierungsgrad zu niedrig, wird eine sehr gute Tintentrocknung, aber eine mangelhafte Wasser- bzw. Feuchtigkeitsbeständigkeit beobachtet. Der Acetalisierungsgrad ist daher derart einzustellen, daß sowohl die Wasserbeständigkeit als auch die Tintentrocknung in einem ausgewogenen Verhältnis zu einander stehen.

Da auf den Einsatz von organischen Lösemitteln verzichtet werden soll, ist die Höhe des Acetalisierungsgrads nach oben begrenzt. Diese Grenze ist abhängig von der Hydrophilie des zur Acetalisiserung eingesetzten Aldehyds, dem Molekulargewicht des eingesetzten Polyvinylalkohols sowie von dessen Hydrolysegrad, sie liegt aber jedenfalls unterhalb von 20 Mol-%, bezogen auf die Vinylalkohol-Einheiten. Die Höhe des Acetalisierungsgrades, bei dem noch Wasserlöslichkeit gegeben ist, hängt bei Einsatz eines bestimmten Aldehyds hauptsächlich von dem Molekulargewicht des Ausgangs-Polyvinylalkohols ab. Je niedriger das Molekulargewicht des Ausgangs-Polyvinylalkohols, desto höher können die Acetalisierungsgrade werden. Entsprechend gilt natürlich auch der umgekehrte Fall, je höher das Molekulargewicht des Ausgangs-Polyvinylalkohols, desto niedriger die erreichbaren Acetalisierungsgrade, bei denen das Produkt noch wasserlöslich ist.

Bei Acetalisierungsgraden im oberen Bereich zwischen 15 und 20 Mol-%, bezogen auf Vinylalkohol-Einheiten, ist die Wasserlöslichkeit bei Raumtemperatur gerade noch gegeben. Eine sehr schnelle Trocknung wird bei Materialien mit bis zu 5 Mol-% Acetalisierungsgrad, bezogen auf Vinylalkohol-Einheiten erzielt. Allerdings ist die Wischfestigkeit im allgemeinen bei niedrigem Acetalisierungsgrad gering. Bei einem Acetalisierungsgrad von mindestens 5 Mol-%, bezogen auf Vinylalkohol-Einheiten, bis zu dem durch die Löslichkeit in Wasser bestimmten maximalen Acetalisierungsgrad ist das Verhältnis von Wischfestigkeit und Trocknungsgeschwindigkeit besonders ausgewogen.

Die Herstellung der erfindungsgemäß zu verwendenden teilacetalisierten Polyvinylalkohole kann sowohl durch frei im wäßrigen Medium vorhandene Säure als auch durch Einsatz geträgerter Säuren, wie beispielsweise in der deutschen Patentanmeldung P 196 17 893.2 beschrieben, erreicht werden. Letzteres hat den Vorteil, daß die erhaltene Produktlösung nicht durch große Mengen an Lauge, die zur Neutralisation der eingesetzten Säuremenge benötigt wird, eine zusätzliche Salzfracht erhält. Dies bringt deutliche Vorteile für die thermische Festigkeit und die Transparenz der Folie. Salze können sich unter Umständen nachteilig auf die Transparenz sowie andere Eigenschaften, beispielsweise Haftung der Beschichtung auf der Trägerfolien auswirken. Das Entfernen des Salzes ist gewöhnlich über eine Dialyseeinrichtung möglich. Dieses Verfahren ist aber aufwendig und kostenintensiv.

Nachdem die Produktlösung hergestellt und neutralisiert worden ist, kann die Lösung direkt appliziert werden. Eine Konservierung kann bei längeren Standzeiten vorteilhaft sein. Die Lösung des teilacetalisierten Polyvinylalkohols kann zu freitragenden Folien gegossen werden oder auf Trägerfolien appliziert werden. Als geeignete Trägerfolienmaterialien, die mit dem teilacetalisierten Polyvinylalkohol beschichtet werden können, eignen sich übliche Folienmaterialien, beispielsweise Polyethylenterephthalat (PET), Polypropylen (PP), Polyvinylchlorid (PVC), Polymethylmethacrylat (PMMA), Polycarbonat (PC).

Die Beschichtung dieser Trägerfolien mit dem erfindungsgemäßen Material kann nach bekannten Verfahren erfolgen. Beispielsweise eignen sich dafür das sogenannte Wischer-Verfahren oder der Einsatz eines Rakels (doctor blade).

Die erhaltenen Oberflächenmaterialien zeichnen sich dadurch aus, daß sie mit herkömmlichen "hydrophilen" kommerziellen Stiften bzw. mit Laserdruckern und Kopiergeräten leicht beschreibbar bzw. bedruckbar sind und die aufgebrachte Beschriftung wischfest ist.

### Beispiel 1

### Herstellung eines teilacetalisierten Polyvinylalkohols

Zu einer 15 Gew.-%igen Lösung eines Polyvinylalkohols vom Typ ®Mowiol 4-98 (Hoechst AG, Hydrolysegrad 98 MOl-%) wurden 98,6 Gramm Butyraldehyd (99 %ig) gegeben und bei Raumtemperatur gerührt. Anschließend wurden über einen Zeitraum von 60 Minuten 253 ml 20 Gew.-%ige Salzsäure zudosiert. Danach wurde innerhalb von 120 Minuten auf 30 °C erwärmt und mit 10 Gew.-%iger Natronlauge auf einen pH-Wert von 7 bis 8 eingestellt. Die Entfernung von gelösten Salzen aus der Produktlösung wurde mittels einer Dialyseeinrichtung erreicht. Die Viskositäten, gemessen nach DIN 53015 (Höppler-Kugelfallviskosimeter) betrugen bei 20 °C für eine 4 Gew.-%ige wäßrige Lösung 4,68 mPa·s und für eine 8 Gew.-%ige wäßrige Lösung 28,36 mPa·s. Der Acetalisierungsgrad betrug 12 Mol-%, bezogen auf Vinylalkohol-Einheiten.

### Beispiel 2

### Herstellung eines teilacetalisierten Polyvinylalkohols

Zu einer 15 Gew.-%igen Lösung aus Polyvinylalkohol Mowiol 10-98 wurden 68,9 g Butyraldehyd (98,8 %ig) gegeben und gemäß der deutschen Patentanmeldung P 196 17 893.2 bei 7 °C mit geträgerten Säuren, die die Acetalisierungsreaktion katalysieren aber nicht in dem wäßrigen Medium gelöst sind, umgesetzt. Anschließend wurde die Reaktionslösung mittels wäßriger Natronlauge auf einen pH-Wert von 7 bis 8 gestellt. Die Viskositäten, gemessen nach DIN 53015 (Höppler-Kugelfallviskosimeter), betrugen bei 20 °C für eine 4 Gew.-%ige wäßrige Lösung 9,98 mPa·s und für eine 8 Gew.-%ige wäßrige Lösung 71,5 mPa·s. Der Acetalisierungsgrad betrug 8 Mol-%, bezogen auf Vinylalkohol-Einheiten.

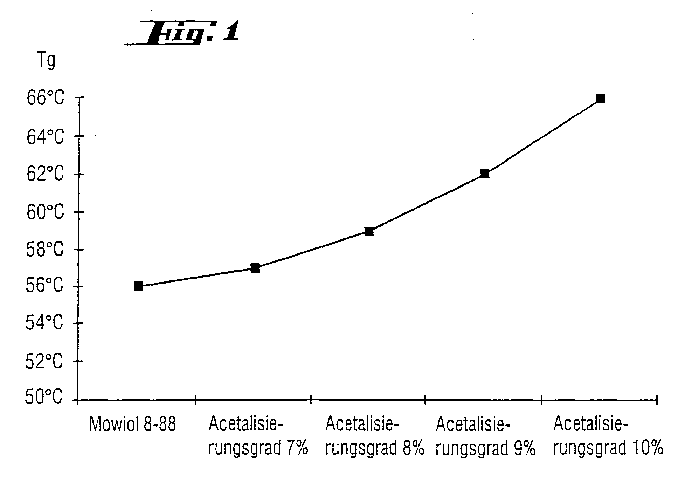

Die Untersuchungen der isolierten Produkte mittels Differential Scanning Calorimetry (DSC) (gemäß DIN 53765) zeigen deutlich, wie sich die Glasübergangstemperatur (Tg) mit steigendem Acetalisierungsgrad im Vergleich zum Ausgangspolyvinylalkohol erhöht. Die gefundene Abhängigkeit ist in der Abbildung 1 dargestellt.

### Beschichtungsanwendung:

Die Polyvinylalkohol-Lösung aus Beispiel 1 mit einem Acetalisierungsgrad von 12 Mol-% und einem Feststoffgehalt von 15 Gew.-% wurde mittels eines Rakels auf eine 100 *µ*m dicke Polyethylenterephthalat-Folie aufgetragen. Anschließend wurde die Folie bei 100 °C für 2 Minuten getrocknet. Der nach der Trocknung resultierende Film auf der Polyethylenterephthalat-Folie hatte eine Dicke im Bereich von 2 bis 5 *µ*m. Der so erhaltene Verbund wurde mit einem herkömmlichen kommerziellen Ball-pen, beispielsweise einem Stift der Marke ® uni-ball micro (Faber-Castell GmbH), beschrieben. Die Tinte trocknete innerhalb kürzester Zeit auf der Folie und konnte mit der bloßen Hand nicht weggewischt werden. Bei der Projektion mit einem gewöhnlichen Overhead-Projektor war die Schrift auf der Leinwand klar und deutlich lesbar.

## Patentansprüche

1. Verwendung von einem Oberflächenmaterial, das im wesentlichen aus einem wasserlöslichen, mit einem aliphatischen (C₁-C₈)-Aldehyd teilacetalisierten Polyvinylalkohol mit einem Acetalisierungsgrad von weniger als 20 Mol-%, bezogen auf VinylalkoholEinheiten, besteht und frei von Aluminahydrat ist, in beschreibbaren oder bedruckbaren Folien oder Papieren.

2. Verwendung nach Anspruch 1, **dadurch gekennzeichnet, daß** der Acetalisierungsgrad des teilacetalisierten Polyvinylalkohols 1 bis 15 Mol-%, bezogen auf Vinylalkohol-Einheiten beträgt.

3. Verwendung nach Anspruch 1, **dadurch gekennzeichnet, daß** im teilacetalisierten Polyvinylalkohol ein aliphatischer (C₁-C₆)-Aldehyd eingebaut ist.

4. Verwendung nach Anspruch 1, **dadurch gekennzeichnet, daß** im teilacetalisierten Polyvinylalkohol n-Butyraldehyd eingebaut ist.

5. Verwendung nach Anspruch 1, **dadurch gekennzeichnet, daß** ein Polyvinylalkohol mit einem Verseifungsgrad von 70 bis 100 Mol-% zur Teilacetelisierung eingesetzt worden ist.

6. Verwendung nach Anspruch 1, **dadurch gekennzeichnet, daß** ein Polyvinylalkohol mit einer Viskosität nach Höppler von 4 Gew.-%igen Lösungen in Wasser bei 20 °C von 1 bis 100 mPa·s eingesetzt worden ist.

7. Verwendung nach Anspruch 1, **dadurch gekennzeichnet, daß** der teilacetalisierte Polyvinylalkohol in Form von freitragenden Folien eingesetzt wird.

8. Verwendung nach Anspruch 1, **dadurch gekennzeichnet, daß** der teilacetalisierte Polyvinylalkohol als 0,1 bis 100 µm dicke Beschichtung auf einer Trägerfolie eingesetzt wird.

9. Verwendung nach Anspruch 1, **dadurch gekennzeichnet, daß** die Trägerfolie aus der Gruppe Polyethylenterephthalat (PET), Polypropylen (PP), Polyvinylchlorid (PVC), Polymethylmethacrylat (PMMA) und Polycarbonat (PC) ausgewählt ist.

10. Verwendung nach Anspruch 1, **dadurch gekennzeichnet, daß** die Folien als Overhead-Folien eingesetzt werden.

11. Beschreibbare oder bedruckte Folien oder Papiere, die mit einem Oberflächenmaterial beschichtet sind, das im wesentlichen aus einem wasserlöslichen, mit einem aliphatischen (C₁-C₈)-Aldehyd teilacetalisierten Polyvinylalkohol mit einem Acetalisierungsgrad von weniger als 20 Mol-%, bezogen auf Vinylalkohol-Einheiten, besteht und frei von Aluminahydrat ist.

## Claims

1. The use of a surface material which essentially comprises a water-soluble polyvinyl alcohol which has been partially acetalized with an aliphatic C₁-C₈-aldehyde and has a degree of acetalization of less than 20 mol%, based on vinyl alcohol units, and which is free of alumina hydrate, in writable or printable films or papers.

2. The use as claimed in claim 1, wherein the degree of acetalization of the partially acetalized polyvinyl alcohol is from 1 to 15 mol%, based on vinyl alcohol units.

3. The use as claimed in claim 1, wherein an aliphatic C₁-C₆-aldehyde is incorporated in the partially acetalized polyvinyl alcohol.

4. The use as claimed in claim 1, wherein n-butyraldehyde is incorporated in the partially acetalized polyvinyl alcohol.

5. The use as claimed in claim 1, wherein a polyvinyl alcohol having a degree of hydrolysis of from 70 to 100 mol% has been employed for the partial acetalization.

6. The use as claimed in claim 1, wherein a polyvinyl alcohol having a Höppler viscosity of its 4% strength by weight solution in water at 20°C of from 1 to 100 mPa·s has been employed.

7. The use as claimed in claim 1, wherein the partially acetalized polyvinyl alcohol is employed in the form of self-supporting films.

8. The use as claimed in claim 1, wherein the partially acetalized polyvinyl alcohol is employed as a coating with a thickness of from 0.1 to 100 µm on a support film.

9. The use as claimed in claim 1, wherein the support film is selected from the group consisting of polyethylene terephthalate (PET), polypropylene (PP), polyvinyl chloride (PVC), polymethyl methacrylate (PMMA) and polycarbonate (PC).

10. The use as claimed in claim 1, wherein the films are employed as overhead films.

11. Writable or printable films or papers coated with a surface material which essentially comprises a water-soluble polyvinyl alcohol which has been partially acetalized with an aliphatic C₁-C₈-aldehyde and has a degree of acetalization of less than 20 mol%, based on vinyl alcohol units, and which is free of alumina hydrate.

## Revendications

1. Utilisation d'une matière superficielle qui est essentiellement constituée par un poly(alcool vinylique) partiellement acétalisé par un aldéhyde en C₁-C₈ aliphatique, ayant un degré d'acétalisation inférieur à 20 % molaires, par rapport aux motifs alcool vinylique), et qui est exempt d'oxyde d'aluminium hydraté, dans des feuilles ou papiers inscriptibles ou imprimables.

2. Utilisation selon la revendication 1, **caractérisée en ce que** le degré d'acétalisation du poly(alcool vinylique) partiellement acétalisé est de 1 à 15 % molaires, par rapport aux motifs alcool vinylique.

3. Utilisation selon la revendication 1, **caractérisée en ce qu'**un aldéhyde en C₁-C₆ aliphatique est incorporé dans le poly(alcool vinylique) partiellement acétalisé.

4. Utilisation selon la revendication 1, **caractérisée en ce que** l'aldéhyde n-butyrique est incorporé dans le poly(alcool vinylique) partiellement acétalisé.

5. Utilisation selon la revendication 1, **caractérisée en ce qu'**on utilise un poly(alcool vinylique) ayant un degré de saponification de 70 à 100 % molaires pour l'acétalisation partielle.

6. Utilisation selon la revendication 1, **caractérisée en ce qu'**on utilise un poly(alcool vinylique) ayant une viscosité selon Höppler de 1 à 100 mPa.s pour des solutions aqueuses à 4 % en masse, à 20°C.

7. Utilisation selon la revendication 1, **caractérisée en ce qu'**on utilise le poly(alcool vinylique) partiellement acétalisé sous forme de feuille autoportante.

8. Utilisation selon la revendication 1, **caractérisée en ce qu'**on utilise le poly(alcool vinylique) partiellement acétalisé sous forme de revêtement de 0,1 à 100 *µ*m d'épaisseur sur une feuille de support.

9. Utilisation selon la revendication 1, **caractérisée en ce qu'**on choisit la feuille de support dans le groupe comportant le poly(téréphtalate d'éthylène) (PET), le polypropylène (PP), le poly(chlorure de vinyle) (PVC), le poly(méthacrylate de méthyle) (PMMA) et le polycarbonate (PC).

10. Utilisation selon la revendication 1, **caractérisée en ce qu'**on utilise les feuilles comme feuilles pour rétroprojection.

11. Feuilles ou papiers inscriptibles ou imprimés qui sont revêtus d'une matière superficielle qui est essentiellement constituée par un poly(alcool vinylique) partiellement acétalisé par un aldéhyde en C₁-C₈ aliphatique ayant un degré d'acétalisation inférieur à 20 % molaires, par rapport aux motifs alcool vinylique , et qui est exempt d'oxyde d'aluminium hydraté.
